# EUROPEAN PATENT APPLICATION

(11) **EP 1 359 342 A1**
(43) Date of publication of application: **05.11.2003**
(21) Application number: 03368026.5
(22) Date of filing: 17.04.2003
(51) Int. Cl.: F16F 13/08, B62D 33/06

(54) **Fluid-filled mount**

(30) Priority: 01.05.2002 KR 2393000005
(71) Applicant: Fukoku Co. Ltd., Saitama 362-0003 (JP)
(72) Inventor: Tanaka, Tatsuo, Tokyo 114-0014 (JP); Kuzukawa, Mitsuo, Kounosu City, Saitama 365-0063 (JP)
(74) Representative: Bonneau, Gérard

(57) **Abstract**

Disclosed is a fluid-filled mount, which is advantageous in terms of large vertical strokes and high damping effect while not being broken even under large impact. The fluid-filled mount includes a stud (7) supporting a target vibrating material (2) at one end thereof, a cup-shaped housing (5) having a closed bottom and filled with a damping fluid (12), an elastic cylindrical body (9) mounted to an upper portion of the cup-shaped housing and supporting a sleeve (8) such that the sleeve is slidably assembled with the stud at a position between the stud and the elastic cylindrical body, a damping plate (6) mounted to a lower end of the stud and placed in the damping fluid, a spring (11) disposed between the damping plate and the bottom of the cup-shaped housing to absorb impact, and sliding seals (10) fitted into a gap between the sleeve and the stud to prevent fluid leakage.

## Description

### Technical Field

The present invention relates to a fluid-filled mount, serving as a vibration protector, suitable for use in supporting a target vibrating material, such as a cab of an industrial vehicle or construction equipment, for example, a power shovel or dump truck, which is advantageous in terms of large vertical stroke and high vibration-damping effect.

### Background Art

As well known to those skilled in the art, a fluid-filled mount having a vibration-damping function is mounted between a chassis and a cab of industrial vehicles so that vibrations applied to the chassis are not transferred to the cab upon driving and operation of the industrial vehicles.

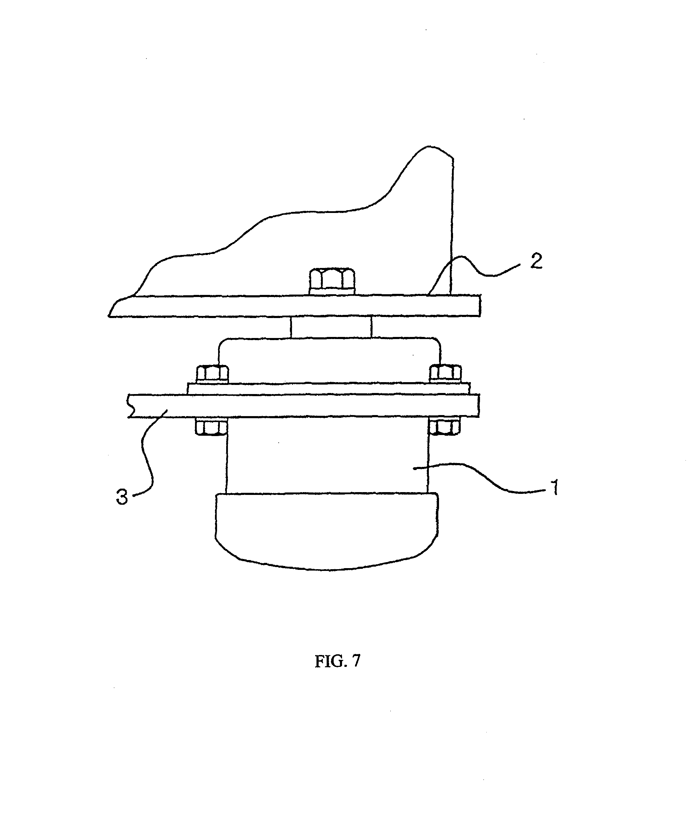

With reference to FIG. 7, there is shown a fluid-filled mount mounted to an industrial vehicle.

In this figure, the reference numeral 1 indicates the fluid-filled mount supporting a cab of the industrial vehicle, and the reference numerals 2 and 3 indicate a bottom surface of the cab and a chassis, respectively. The mount 1 is inserted into the cab 2 and the chassis 3 so that vibrations transferred from a road surface to the chassis are prevented from being transferred to the cab, thus protecting the cab from vibrations.

Conventionally, there are required industrial vehicles which are solidly built and are not breakable. However, at present, cabs of industrial vehicles need comfortable roominess and high operability, and ergonomic features.

In this regard, the present inventor proposed a mount disclosed in Japanese Utility Model Laid-open Publication No. Hei. 4-101835, in which the mount has a high damping effect in a vertical direction by increasing tanδ as a damping coefficient in a high frequency region.

The above mount is composed of a cylindrical housing, an elastic cylindrical body mounted to the cylindrical housing, a stud mounted into a central opening of the elastic cylindrical body, a damping plate mounted to a lower end of the stud, and a damping fluid having high viscosity filled in the housing equipped with the damping plate. As for the mount, the elastic cylindrical body and the damping plate function to dampen vertical vibrations. In particular, the elastic cylindrical body serves to exhibit lateral strength against lateral impact.

In addition, Japanese Patent Laid-open Publication No. Hei. 6-257638 discloses a mount having lateral vibration-proofing properties by enhancing lateral impact strength of an elastic cylindrical body.

However, as for the conventional fluid-filled mounts, a stud equipped with a damping plate is mounted to an inner surface of an elastic cylindrical body, and a housing is mounted to an outer surface of the elastic cylindrical body. In case such a mount is subjected to excessive impact, large shear force is applied to the elastic cylindrical body, which is easily breakable. Thus, it is difficult to use the conventional mounts in fields where large impacts may occur.

In addition, when a target vibrating material is heavy, the elastic cylindrical body is subjected to large impact. Thus, the cylindrical body should be made to have very high strength against impact, or a plurality of mounts should be disposed to distribute impact. It is difficult for the conventional fluid-filled mounts to simultaneously perform the vibration-proofing function while being subjected to impact.

### Disclosure of the Invention

Accordingly, the present invention has been made keeping in mind the above problems in the prior art, and an object of the present invention is to provide a fluid-filled mount, which is advantageous in terms of large vertical strokes and high lateral impact strength while not being breakable even under high impact.

To achieve the above object, the present invention provides a fluid-filled mount, comprising a stud supporting a target vibrating material at one end thereof, a cup-shaped housing having a closed bottom and filled with a damping fluid, an elastic cylindrical body mounted to an upper portion of the cup-shaped housing and supporting a sleeve such that the sleeve is slidably assembled with the stud at a position between the stud and the elastic cylindrical body, a damping plate mounted to a lower end of the stud and placed in the damping fluid, a spring disposed between the damping plate and the bottom of the cup-shaped housing to absorb impact, and sliding seals fitted into a gap between the sleeve and the stud to prevent fluid leakage.

The spring positioned below the damping plate functions to absorb impact applied from a cab of an industrial vehicle. Thus, even though the stud directly or indirectly fixed to a bottom portion of the cab is subjected to large vertical impact, the vertical impact energy is not transferred to the elastic cylindrical body. Hence, the elastic cylindrical body does not break. The elastic cylindrical body, mounted to an outer circumferential surface of the stud, functions to absorb lateral impact applied from the stud, thus exhibiting lateral strength against lateral impact.

Meanwhile, the damping fluid should be surely prevented from leaking through a narrow gap between the stud and the sleeve even though being low in viscosity. Thus, there are used the sliding seals mounted between the stud and the sleeve slidably assembled with the stud.

When one end of the spring is directly supported by the damping plate or the stud and the other end thereof is supported by the bottom of the cup-shaped housing, the spring functions to absorb impact as much as a restoring force of the spring when the spring is compressed due to a movement of the damping plate or the stud.

As for the fluid-filled mount, the spring is assembled in a pre-compressed state.

The spring is used in the state of being pre-compressed, depending on a weight of the target vibrating material, such as the cab of an industrial vehicle. Thus, a spring having a low spring constant may be employed in an acceptable impact range of the fluid-filled mount of the present invention. Thereby, a small-sized fluid-filled mount is realized. In particular, in case of using a linear spring having a predetermined spring constant which is invariable even though the spring is pre-compressed, the spring is compressed up to a maximal range capable of supporting the target vibrating material, whereby an axial length of the fluid-filled mount is decreased.

In addition, when the spring is used in the pre-compressed state, it is not separated from the damping plate upon upward movement of the damping plate even though the spring is not fixed to the damping plate. Hence, the spring is effectively maintained at a desired place when the spring is held such that it is not diverged from its axis, and noise upon bringing the spring into contact with the damping plate is prevented.

As for the fluid-filled mount, the sliding seals are formed to be self-sealing.

In the present invention, the sliding seals are fitted into the gap between the stud and the sleeve slidably fitted over the stud. The sliding seals comprise a self-sealing type seal acting to completely seal the gap between the stud and the sleeve depending on pressure, which is exemplified by a cup-shaped seal, such as a U- or V-seal, or a lip seal, such as an X-seal. In this regard, when the damping plate placed in the damping fluid is upwardly moved, the damping fluid is shoved up to a sliding part of the stud according to such a movement of the damping plate, resulting in that internal pressure in the sliding part of the stud is partially increased. In such a case, the self-sealing type sliding seal functions to exert pressure to the stud, according to increased internal pressure. Hence, leakage of the damping fluid is prevented by the sliding seals.

As for the fluid-filled mount, the elastic cylindrical body comprises a layered structure, with a plurality of cylindrical bushes embedded in the cylindrical body.

In the present invention, since the elastic cylindrical body has the cylindrical bushes to form the layered structure, the strength against lateral impact increases.

As for the fluid-filled mount, the elastic cylindrical body comprises elastic layers having different strengths against lateral impact, divided by the cylindrical bushes.

In the present invention, because elastic layers of the elastic cylindrical body are different in their strength against impact, impact may be uniformly distributed to the layers or concentrated on one desired layer.

For example, a first elastic layer positioned at an axial center of the elastic cylindrical body has high impact strength, whereas a second elastic layer positioned outside the first elastic layer has low impact strength and a large volume suitable for absorbing impact. That is, since the second elastic layer has larger volume than that of the first elastic layer, durability of the fluid-filled mount is improved due to distributed impact.

The impact strength of the elastic layers is controlled by varying thickness or height of the layers and/or hardness of the layers.

As for the fluid-filled mount, the damping plate comprises a disk part and a cylindrical part formed along an outer edge of the disk part.

In such a case, a movement of the damping plate results in generation of flow resistance. Moreover, when the damping plate is vertically moved, its vertical movement is inhibited by frictional resistance due to a damping fluid passing through a narrow passage between an outer surface of the cylindrical part formed along the outer edge of the disk part of the damping plate and an inner surface of the cup-shaped housing. Thus, the frictional resistance is added to the flow resistance upon a movement of the damping plate, resulting in a higher damping effect.

Upon lateral movement of the damping plate, frictional resistance is generated by the cylindrical part formed along the outer edge of the disk part of the damping plate, and thus damping effect is improved.

As for the fluid-filled mount, the cylindrical part of the damping plate has an inclined surface almost parallel to an inner surface of the cup-shaped housing.

Since the cylindrical part of the damping plate has a surface with an inclination angle nearly the same as that of the inner surface of the cup-shaped housing, larger strokes are realized upon a vertical movement of the damping plate. As an outer surface of the cylindrical part of the damping plate is closely adjacent to the inner surface of the cup-shaped housing, a narrow space is formed between the parallel surfaces defined by the outer surface of the cylindrical part of the damping plate and the inner surface of the cup-shaped housing. Frictional resistance is generated on the parallel surfaces, and thus higher damping effect is obtained.

As for the fluid-filled mount, a protruded part is formed at the inner surface of the cup-shaped housing and/or a predetermined portion of the elastic cylindrical body, to have a surface facing at least one surface of top and bottom surfaces of the damping plate at a position opposite to the surface of the damping plate.

The protruded part is disposed to face the top surface or the bottom surface of the vertically moving damping plate, thus having a surface parallel to the surface of the damping plate. The protruded part may be directly formed at the inner surface of the cup-shaped housing or formed by means of a beam or a flange, or directly formed at the elastic cylindrical body or formed by means of a beam or a flange.

When the damping plate is upwardly or downwardly moved, the protruded part is positioned in the front of the damping fluid ascending or descending by the damping plate, that is, formed at a position opposite to the damping plate. Thus, a higher damping effect is obtained by flow resistance of the damping fluid.

Further, as the damping plate becomes close to the protruded part, a narrow passage is formed between parallel surfaces of the protruded part and the damping plate. Thus, a higher damping effect is obtained by frictional resistance of the damping fluid on the parallel surfaces.

Therefore, the protruded part is preferably formed at the vertically maximum moving position of the damping plate.

As for the fluid-filled mount, a stopper made of an elastic material is formed at a position opposite to at least one surface of top and bottom surfaces of the damping plate, to limit a vertical movement of the damping plate.

The stud may be excessively moved by vibrations. In such a case, an elastic body or a stopper covering the elastic body and limiting the movement of the stud is formed at an expected contact position of the stud and the protruded part or the housing. Thus, the stud does not come into direct contact with the protruded part or the housing. Consequently, the fluid-filled mount is prevented from breaking. In addition, use of the stopper results in no noise caused by direct contact of the stopper with a metal.

As for the fluid-filled mount, the spring comprises a clockwise coiled spring and a counterclockwise coiled spring.

That is, two coil springs wound in a right direction and a left direction are assembled together in the mount. Thereby, distortion force applied to the damping plate upon extending and compressing the coil spring is offset.

As for the fluid-filled mount, the spring comprises a hollow rubber spring.

In the present invention, the spring is formed of a rubber material to have a hollow chamber. Thus, upon extending and compressing the spring, higher damping effect is obtained by flow of the damping fluid going in and out of an inner chamber of the rubber spring. As well, a flow passage for the damping fluid discharged from the chamber of the rubber spring is additionally formed to control damping effect.

In case the rubber spring is combined with a cap-shaped damping plate, the rubber spring may be limitedly deformed in a space range defined by the cylindrical part of the cap-shaped damping plate. Thereby, a curving phenomenon of the spring is prevented.

As for the fluid-filled mount, a dust-proofing cover is disposed to seal a sliding part of the stud and another sliding part between the stud and the sleeve.

By means of the dust-proofing cover enclosing the sliding part, entry of dust and other foreign substances into the sliding part is prevented.

As for the fluid-filled mount, the damping fluid comprises a silicone oil and a lubricant additive.

The additive, which is added to high viscosity silicone oil exhibiting damping effect, is exemplified by a lubricating agent, such as molybdenum disulfide.

By use of such a lubricating agent, wear between the spring and the metal surface or wear of the sliding seals is decreased, thus improving durability.

As for the fluid-filled mount, a lateral impact-absorbing stopper is provided along an outer circumferential surface of the sleeve such that the lateral impact-absorbing stopper comes in contact with an inner surface of a cylindrical bush of the elastic cylindrical body.

By providing the lateral impact-absorbing stopper, excessive impact is absorbed. For example, when a layer having low strength against lateral impact is formed in the elastic cylindrical body of the layered structure, concentration of excessive impact on such a layer is restrained by means of the above stopper, and breakage of the elastic cylindrical body is prevented.

As for the fluid-filled mount, the damping plate is mounted to the lower end of the stud in a state of being slightly movable relative to the stud in a vertical direction.

In such a case, since the damping plate is slightly movable with respect to the stud, it is not freely moved in the damping fluid having high viscosity and does not function to dampen external vibrations. Thus, the damping plate is effective in damping slight high frequency vibration.

As for the fluid-filled mount of the present invention, the spring acts to absorb vertical impact applied to the stud from the target vibrating material. In the elastic cylindrical body, the stud is slidably assembled with the sleeve positioned between the stud and the elastic cylindrical body. Accordingly, impact is not applied to the elastic cylindrical body, and large stroke is obtained. The damping plate placed in the damping fluid functions to compress the damping fluid whenever the stud is vertically moved, thus encountering flow resistance of the damping fluid, thereby damping vertical movement of the stud.

In addition, the elastic cylindrical body functions to absorb lateral impact while the sleeve is disposed between the stud and the elastic cylindrical body.

As mentioned above, the stud is mounted to the target mounting material and the cup-shaped housing is mounted to the chassis. However, even though the housing and the stud are fixed to the chassis together by use of a bracket, the same effect is obtained.

The spring is exemplified by a conical coil spring, a plate spring, etc., in addition to coil spring or rubber spring.

### Brief Description of the Drawings

The above and other objects, features and other advantages of the present invention will be more clearly understood from the following detailed description taken in conjunction with the accompanying drawings, in which:
FIG. 1 is a sectional view of a fluid-filled mount according to a primary embodiment of the present invention, taken along the line B-B shown in FIG. 2;
FIG. 2 is a sectional view taken along the line A-A of FIG. 1;
FIG. 3 is a sectional view of a fluid-filled mount according to a second embodiment of the present invention, sectioned at the same position as in the sectional view taken along the line B-B of FIG. 2;
FIG. 4 is a sectional view of a fluid-filled mount according to a third embodiment of the present invention, sectioned at the same position as in the sectional view taken along the line B-B of FIG. 2;
FIG. 5 is a sectional view of a fluid-filled mount according to a fourth embodiment of the present invention, sectioned at the same position as in the sectional view taken along the line B-B of FIG. 2;
FIG. 6 is a sectional view of a fluid-filled mount according to a fifth embodiment of the present invention; and
FIG. 7 is a view illustrating a mounted state of the fluid-filled mount of the present invention to a target vibrating material.

### Best Mode for Carrying Out the Invention

Hereinafter, reference will now be made in detail to the preferred embodiments of the present invention, examples of which are illustrated in the accompanying drawings, wherein like reference numerals refer to like elements throughout.

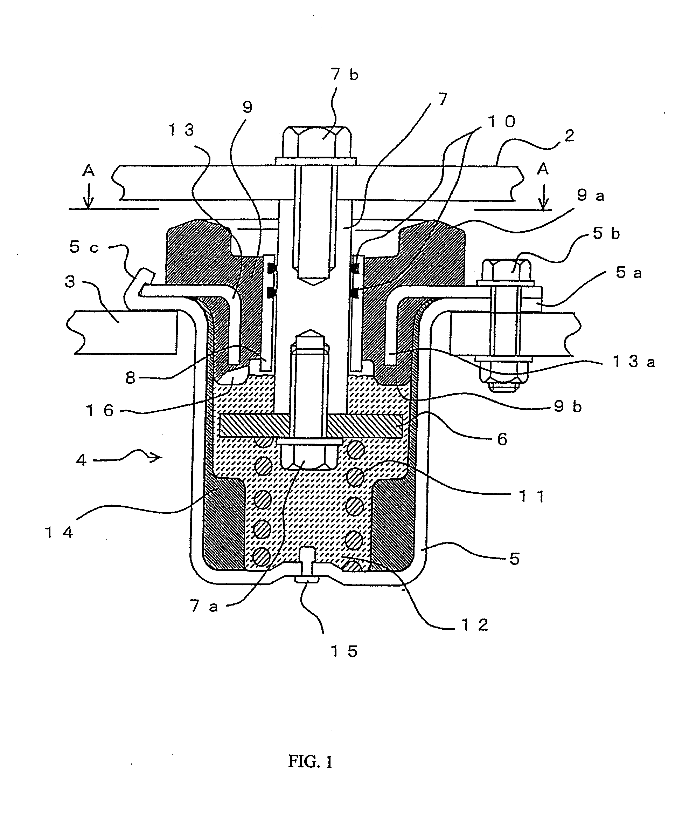

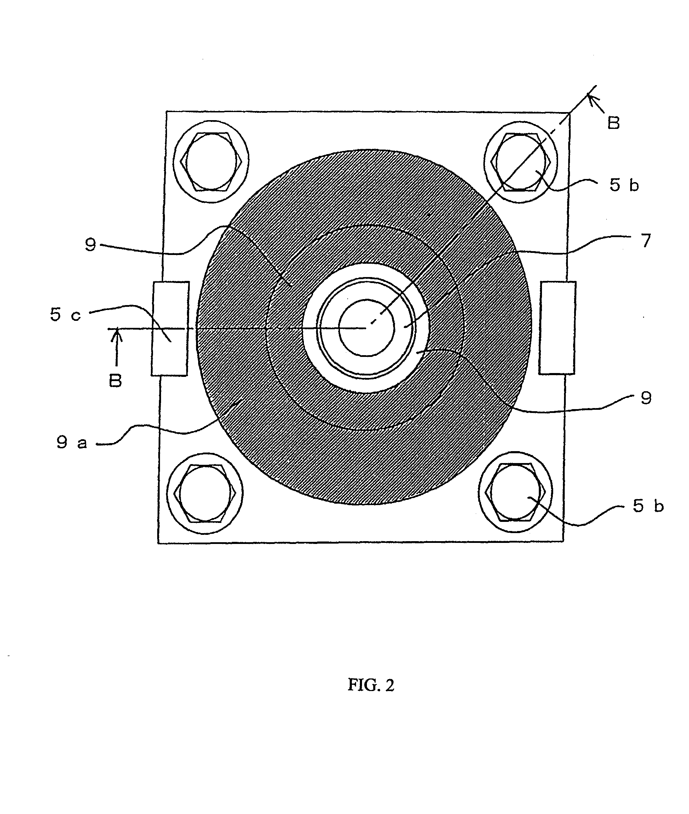

FIGs. 1 and 2 illustrate a fluid-filled mount according to a primary embodiment of the present invention, in which FIG. 1 is a sectional view taken along the line B-B of FIG. 2, and FIG. 2 is a sectional view taken along the line A-A of FIG. 1.

As shown in FIG. 1, the reference numeral 4 indicates the fluid-filled mount. The fluid-filled mount 4 is interposed into a target vibrating material 2, such as a bottom of a cab of an industrial vehicle, and a chassis 3, to elastically support the target vibrating material 2.

The fluid-filled mount 4 comprises a cup-shaped housing 5 having a closed bottom, a damping plate 6 vertically movable in the housing 5, and a stud 7 fastened to the damping plate 6 by a bolt 7a. A top portion of the stud 7 is mounted to the target vibrating material 2, such as the cab of industrial vehicles, and a flange 5a formed at an upper edge of the housing 5 is fastened to the chassis 3 which is subjected to vibrations from a road surface, by means of a bolt 5b.

In addition, an elastic cylindrical body 9 is disposed between an upper portion of the housing 5 and a sleeve 8 slidably fitted over the stud 7, whereby the cylindrical body 9 functions to absorb lateral impact applied thereto through the stud 7 and to fill a space between the housing 5 and the sleeve 8. Also, a gap between the sleeve 8 and the stud 7 is sealed by sliding seals 10 disposed at the inner surface of the sleeve 8, so that the stud 7 is slidably assembled with the sleeve 8.

The damping plate 6 is formed in a disk shape having an inner diameter smaller than that of the housing 5. A coil spring 11 is mounted between the damping plate 6 and the bottom of the housing 5. A damping fluid 12 having high viscosity, such as silicone oil, is filled in the housing 5, along with the coil spring 11.

The sleeve 8 is vulcanized to an inner surface of the elastic cylindrical body 9, and a cylindrical holder 13 provided with a flange is made of a rubber material integrally vulcanized to an outer portion of the elastic cylindrical body 9. The flange of the holder 13 is caulked to the housing 5 by a caulked part 5c of the housing 5, and it is also fastened by the bolt 5b, together with the flange 5a of the housing 5, in a screw hole formed at the flange of the holder 13. Thereby, the flanges are firmly fixed. A cylindrical part 13a of the holder 13 embedded in the elastic cylindrical body 9 is mounted to face the sleeve 8, so as to absorb lateral impact through the sleeve 8 and the elastic cylindrical body 9 when the stud 7 is laterally moved.

A stopper 9a, capable of coming into elastic contact with the target vibrating material 2, is integrally formed at a top portion of the elastic cylindrical body 9. In addition, another stopper 9b, which comes into elastic contact with the damping plate 6, is integrally formed at a bottom portion of the elastic cylindrical body 9. Even though excessive vertical operation of the vibrating material 2 is performed, breakage of the fluid-filled mount 4 is prevented by means of the above stoppers 9a and 9b.

Although the holder 13 along with the housing 5 is fixed to the chassis by a caulking process in the present embodiment, it may be fixed by other known methods, such as a welding process. That is, the holder 13 and the housing 5 may be fastened to the chassis 3 through a variety of fastening methods.

At an inner side wall of the housing 5, a protruded part 14 is provided. The protruded part 14 is positioned to face the damping plate 6 at a thick portion thereof, and has a surface parallel to the damping plate 6. Thus, the protruded part 14 functions to stop flow of the damping fluid 12 compressed by the damping plate 6 upon downward movement of the damping plate 6, obtaining high damping effect. When the damping plate 6 is close to the protruded part 14, higher damping effect is obtained. Further, since the protruded part 14 is made of an elastic material, it comes into elastic contact with the damping plate 6 upon an excessive movement of the damping plate 6 and thus functions as a stopper for restraining such an excessive movement of the damping plate 6. In addition, the protruded part 14 has a function of preventing distortion of a spring 11.

The above-mentioned stopper 9b functions to stop flow of the damping fluid 12 ascending by the damping plate 6 as in the protruded part 14, thereby achieving a higher damping effect.

The damping fluid 12 is filled through an injection hole formed at the bottom of the housing 5, and a plug 15 is fitted into the hole.

Since the fluid-filled mount 4 of the present invention comprises two sliding seals 10 mounted to the inner surface of the sleeve 8, it is completely sealed. Simultaneously, the sliding seals 10 function to prevent entry of dust and foreign substances into the gap between the stud 7 and the sleeve 8, thereby ensuring the sealing effect of the sliding seals for a long period of time. Only one sliding seal may be used so long as dust or foreign substances do not enter into the gap between the stud 7 and the sleeve 8 by additionally providing a dust-proofing cover to the sliding seal. However, it is preferable that two or more sliding seals are used to ensure the sealing effect and to correspond to increased internal pressure as defined later.

As for the fluid-filled mount 4 of the present invention, the stud 7 is upwardly moved by a large stroke according to operation of the target vibrating material 2, and the damping plate 6 sequentially moves upwards. As such, while a space between the bottom of the elastic cylindrical body 9 and the damping plate 6 becomes narrow, the damping fluid 12 present in the above space flows between the damping plate 6 and the housing 5. However, attributable to high viscosity of the damping fluid 12, internal pressure of the space between the bottom of the elastic cylindrical body 9 and the damping plate 6 is temporarily increased, whereby the damping fluid 12 may leak out through the gap between the stud 7 and the sleeve 8. Therefore, there is required the sliding seals 10 capable of enduring such increased internal pressure. Further, the stopper 9b of the elastic cylindrical body 9 is formed with several communication passages 16 in a radial arrangement. Thereby, the damping fluid 12 is not sealed in a space defined by the damping plate 6, the stud 7 and the stopper 9b of the elastic cylindrical body 9.

Since the sliding seals 10 are disposed at the inner surface of the sleeve 8, the length of the stud 7 is adjusted regardless of axial length of the sleeve 8, thus controlling strokes. If the sliding seals 10 are disposed at the stud 7, allowable strokes of the stud 7 should be less than the length of the sleeve 8.

It is preferred that the sliding seals 10 are formed to be self-sealing, which results in a desired sealing effect by increasing internal pressure of a sealed portion, in addition to conventional O-rings.

When internal pressure is temporarily increased according to vertical movement of the damping plate 6, a seal lip is adhered to the outer surface of the stud 7 according to such internal pressure and functions to exert pressure to the stud 7, so as to increase seal strength. Thus, the damping fluid 12 cannot but leak. Meanwhile, when the internal pressure is not increased, there is no need for exerting pressure to the stud 7. Hence, the stud 7 is smoothly movable relative to the seals 10.

Since a sliding surface of the stud 7 is composed of the outer surface thereof, the stud 7 is subjected to a surface treatment, such as known low friction treatment or curing treatment. The above-mentioned surface treatments are favorable in terms of low cost, because they are more suitable for use in the outer surface than the inner surface of the stud 7. Upon surface treatment, there is used a hard chromium plating or a nitride surface treatment.

The coil spring 11 is assembled in the state of being pre-compressed by the target vibrating material 2. Upon vertical movement of the damping plate 6, since the spring 11 is freely extended and compressed depending on spring length in the compression range, it does not act to apply tension to the damping plate 6. Thus, even though the damping plate 6 and the stud 7 are connected by means of a caulking or welding process, instead of a bolt-fastening process, they are not easily detached from each other.

The coil spring 11 has high durability when it is compressed, however is inelastically strained when it is extended. In terms of durability of the spring itself, it is preferably that no tension is applied thereto.

Although the damping plate 6 is formed in a disk shape, it may be formed as a flat plate corresponding to the inner surface of the housing 5 or an edge of the disk-shaped damping plate 6 may be assembled with a cylindrical or tapered part (not shown).

In such a case, the stopper 9b or the protruded part 14 facing the damping plate 6 is formed to a shape complementary to the cylindrical shape or the tapered shape of the damping plate 6, preferably, a shape having a surface parallel to the surface of the facing damping plate 6, and thus functions to stop flow of the damping fluid 12. Alternatively, the damping fluid 12 may pass through a narrow passage formed by the stopper 9b and the protruded part 14. Thereby, high damping effect is obtained.

The damping fluid 12 is injected into the housing 5 through one injection hole formed at the bottom of the housing 5. However, a plurality of holes may be formed, after which injection of the damping fluid into and exhaust of air from the housing 5 are performed at the same time, whereby the damping fluid 12 having high viscosity can be injected into the housing 5 within a short time. Alternatively, the damping fluid 12 may be previously filled in the housing 5 and then sealed, without use of the injection hole.

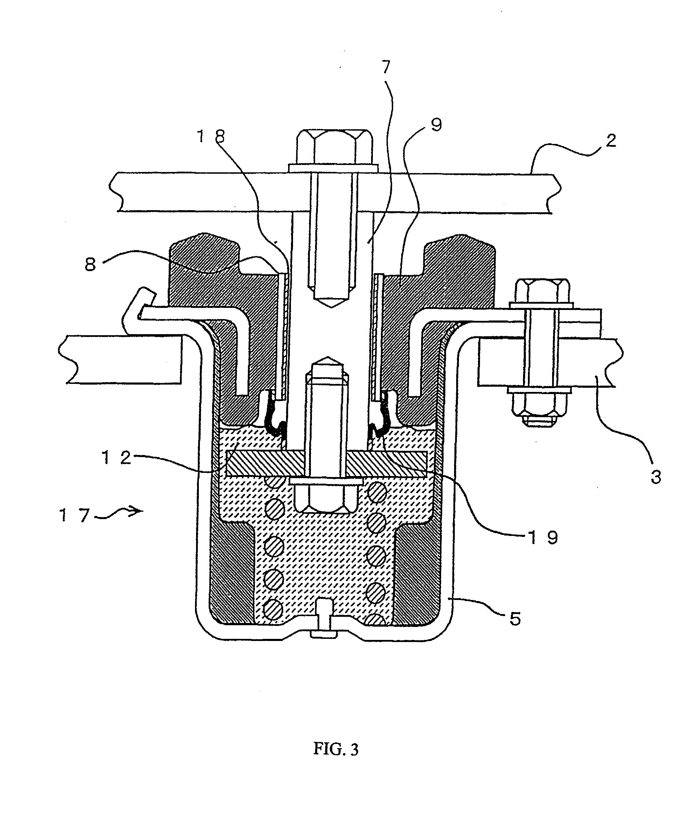

FIG. 3 illustrates a fluid-filled mount according to a second embodiment of the present invention. This figure is a view sectioned at the same position as in the sectional view taken along the line B-B of FIG. 2.

As shown in FIG. 3, the reference numeral 17 indicates the fluid-filled mount according to the second embodiment of the present invention. The fluid-filled mount 17 comprises an elastic cylindrical body 9, a sleeve 8 vulcanized into the elastic cylindrical body 9, and a bearing cylindrical body 18 fixed to an inner surface of the sleeve 8 to be slidably fitted over a stud 7.

The reference numeral 19 indicates a diaphragm made of rubber. The diaphragm 19 functions to seal the gap between the lower ends of the sleeve 8 and the stud 7 to prevent fluid leakage through the gap. While the diaphragm 19 permits the stud 7 to vertically move, it acts to seal the gap between the sleeve 8 and the stud 7 to prevent leakage of a damping fluid 12. Other structural parts remain the same as in the primary embodiment.

Although the diaphragm 19 is subjected to pressure from the stud 7 due to partial increase of internal pressure by upward movement of the damping plate 6, it has sufficient strength to resist the pressure since it is formed in a diaphragm shape. In addition, since the diaphragm 19 is positioned at predetermined intervals from the stud 7 and the sleeve 8, it is not jammed into the stud 7 and the sleeve 8 during an operation of the mount 17.

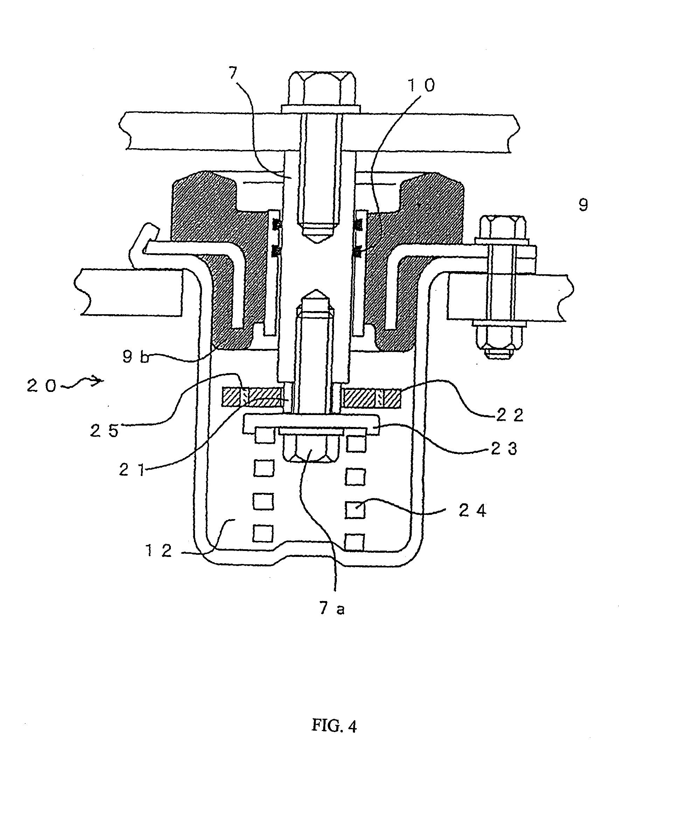

FIG. 4 illustrates a fluid-filled mount according to a third embodiment of the present invention. This figure is a view sectioned at the same position as in the sectional view taken along the line B-B of FIG. 2.

As shown in FIG. 4, the reference numeral 20 indicates the fluid-filled mount according to the third embodiment of the present invention. The fluid-filled mount 20 comprises a stud 7, a support sleeve 21 positioned at a lower end of the stud 7, a damping plate 22 fitted over the support sleeve 21 to be slightly movable, and a spring support part 23. As such, the damping plate 22 and the spring support part 23 are fastened together by means of a bolt 7a. The spring support part 23 is composed of a downwardly projected rim along an edge thereof to support an end of a coil spring 24 formed of a wire having a rectangular cross-section, and functions to hold the coil spring 24. Other structural parts remain the same as in the primary embodiment. A damping fluid is not represented in this figure.

Since the damping plate 22 is fitted over the support sleeve 21 at a predetermined interval from the outer surface of the support sleeve 21, even though the stud 7 is slightly vibrated at high frequencies, such vibration is not applied to the damping plate 22.

If the damping plate 22 is firmly fixed to the stud 7, the damping fluid having high viscosity (not shown in the figure) cannot flow even under external high frequency vibration. Thus, a movement of the damping plate 22 placed in the damping fluid is restrained, and high impact is directly applied to the junction of the damping plate 22 and the stud 7. However, because the damping plate 22 is mounted to be movable in this embodiment, durability of the junction of the damping plate 22 and the stud 7 is increased.

In addition, although the support sleeve 21 and the damping plate 22 are assembled together at a predetermined interval, a resin bearing may be fitted into the gap between the sleeve 21 and the damping plate 22, resulting in that the damping plate 22 may be slid on the resin bearing in the case of fine vibration of high frequency.

Use of the coil spring having such a rectangular cross-section results in larger stroke, compared to coil springs having circular cross-sections.

The damping plate 22 has a plurality of small through holes 25 at predetermined positions thereof. When internal pressure around the lower end of the stud 7 is temporarily increased due to an upward movement of the damping plate 22, the through holes 25 serve to discharge the damping fluid downwards. Thereby, excessive internal pressure is not applied to sliding seals 10.

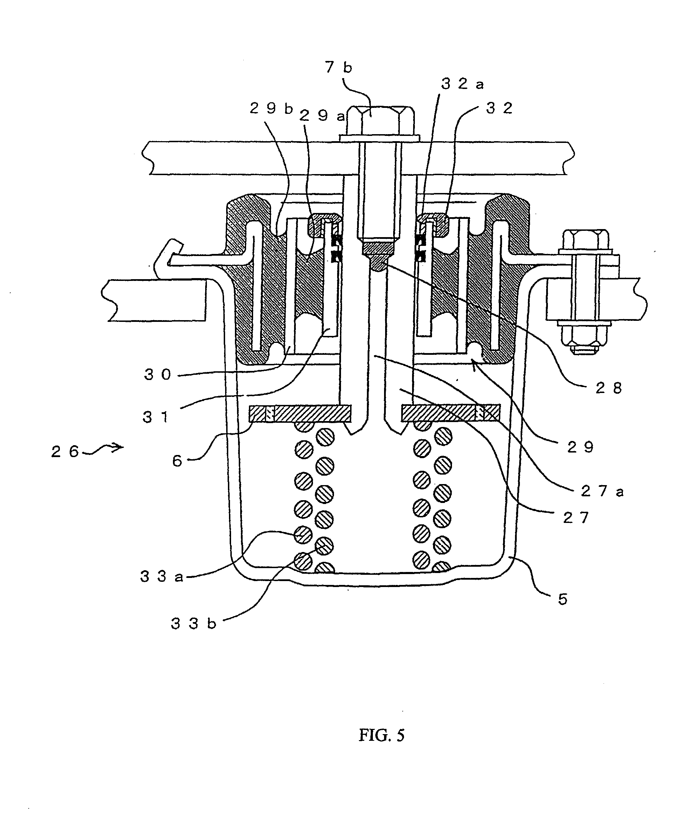

FIG. 5 illustrates a fluid-filled mount according to a fourth embodiment of the present invention. This figure is a view sectioned at the same position as in the sectional view taken along the line B-B of FIG. 2.

As shown in FIG. 5, the reference numeral 26 indicates the fluid-filled mount according to the fourth embodiment of the present invention. As for the fluid-filled mount 26, a damping plate 6 is caulked to a lower end of a stud 27 provided with a damping fluid injection path 27a leading to the lower end from an upper end of the stud 27, in which the injection path 27a is closed by a removable plug 28.

An elastic cylindrical body 29 comprises ring-shaped elastic layers 29a and 29b layered on inner and outer surfaces of a cylindrical bush 30. A lateral impact-absorbing stopper 32 is fitted along a top edge of a sleeve 31 slidably fitted over the stud 27, in which the stopper 32 is integrally provided with a dust-proof lip 32a functioning to prevent entry of dust and other foreign substances into a gap between the stud 27 and the sleeve 31.

As for springs disposed between a closed bottom of a housing 5 and the damping plate 6, a clockwise coiled spring 33a and a counterclockwise coiled spring 33b are disposed in the same axis. Other structural parts remain the same as in the primary embodiment.

In this embodiment, the damping fluid which is not shown in FIG. 5 is filled in the housing 5 through the damping fluid injection path 27a leading to the lower end from a threaded hole of the stud 27. Thus, after the fluid-filled mount 26 is installed in an upright position, the damping fluid may be filled, or discharged, or replaced. The injection path 27a is sealed with the plug 28, in which the plug 28 is inserted into the path 27a by a bolt 7b.

Since the elastic cylindrical body 29 comprises a layered structure, lateral strength against lateral impact is increased. Further, by varying layer thickness and/or height of the elastic layers 29a and 29b, each layer may have different strengths. In this embodiment, the elastic layer 29a is lower in height and strength than those of the elastic layer 29b. Thereby, even though the stud 27 is subjected to slight distortion force, such distortion force is sufficiently absorbed by the elastic cylindrical body 29 having the above configuration. On the other hand, excessive impact may be generated in any case. As such, in order to prevent concentration of such excessive impact on the elastic layer 29a having low impact strength, there is provided the lateral impact-absorbing stopper 32. Such a lateral impact-absorbing stopper 32 is fitted along the top edge of the sleeve 31 to selectively come into contact with the facing cylindrical bush 30. Thereby, the elastic layer 29a is prevented from excessive deformation, and, in addition, dust and other foreign substances is prevented from entering into the gap between the stud 27 and the sleeve 31 by the dust-proof lip 32a integrally provided at the stopper 32.

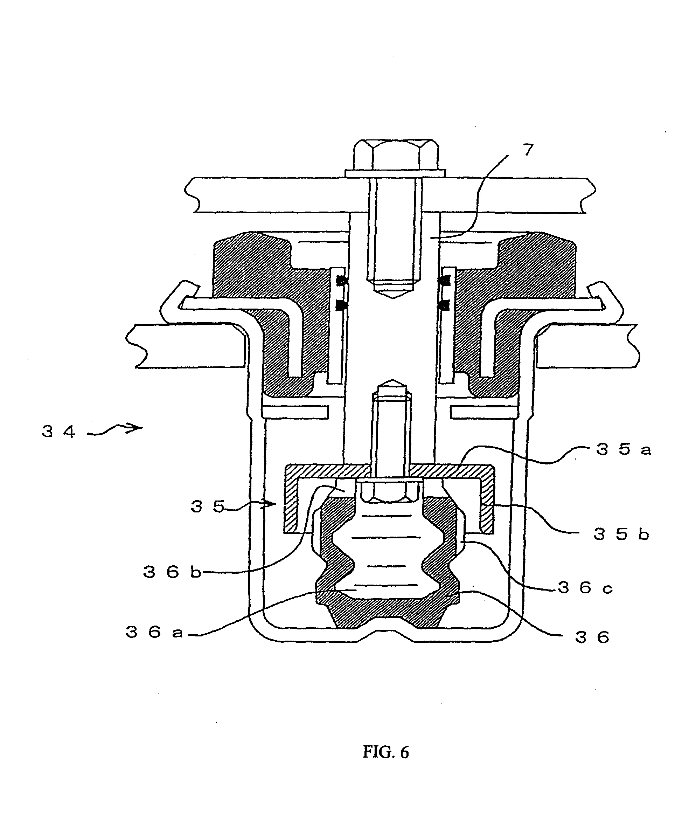

FIG. 6 illustrates a fluid-filled mount according to a fifth embodiment of the present invention, indicated by the reference numeral 34. The fluid-filled mount 34 comprises a cap-shaped damping plate 35 having a disk part 35a and a cylindrical part 35b formed along an outer edge of the disk part 35a. In addition, the damping plate 35 is connected to a lower end of a stud 7 so that an opening of the damping plate 35 faces downwards. A rubber spring 36 made of an elastic material, such as rubber, is disposed between a lower surface of the disk part 35a of the damping plate 35 and the closed bottom of the housing. Other structural parts remain the same as in the primary embodiment. For convenience, the damping fluid is not shown in this figure.

The rubber spring 36 is formed in a drum shape having a hollow chamber 36a therein, and functions as a kind of compression spring which is compressible in a vertical direction.

When the damping plate 35 is downwardly moved by the stud 7 subjected to a downward load, the rubber spring 36 is compressed by the damping plate 35. As such, the rubber spring 36 exhibits impact absorbing property. Moreover, since the damping plate 35 is cap-shaped, deformation of the rubber spring 36 is limited in the cylindrical part 35b of such a damping plate 35. Thereby, nonlinear spring properties of the rubber spring 36 become higher.

The damping fluid, not shown in this figure, filled in the hollow chamber 36a is discharged into the housing through a passage 36b at the same time as compression of the spring 36. The passage 36b may be designed to be complicated by the cylindrical part 35b, and thus high damping effect may be obtained. Another passage 36c may be formed on an outer surface of the rubber spring 36. Consequently, upon compression of the spring 36, a discharging passage for the damping fluid flowing from the hollow chamber 36a is not completely closed, and the rubber spring 36 is prevented from puncture.

Although the cap-shaped damping plate and the rubber spring are used in this embodiment, the damping plate and the spring may be replaced with a combination of disk type damping plate and rubber spring, or a combination of cap-shaped damping plate and rubber spring.

### Industrial Applicability

As described above, the present invention provides a fluid-filled mount, characterized in that sliding seals are disposed between a stud and a sleeve mounted to an inner surface of an elastic cylindrical body, thus realizing large stroke and preventing fluid leakage.

In addition, the sliding seals are formed to be self-sealing. Thus, even though internal pressure of the mount increases, a damping fluid is not leaked. At a normal pressure state, the fluid-filled mount can be smoothly operated.

Further, a spring is assembled in a state of being pre-compressed, and operated under a compression mode, and it can be smoothly operated while effectively absorbing impact even under high impact.

Furthermore, the damping plate is integrated with a cylindrical part, and has a surface parallel to a stopper for use in limiting a movement of the damping plate or an inner surface of a housing, thereby obtaining high damping effect on the parallel surface.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A fluid-filled mount, comprising:
a stud supporting a target vibrating material at one end thereof;
a cup-shaped housing having a closed bottom and filled with a damping fluid;
an elastic cylindrical body mounted to an upper portion of the cup-shaped housing and supporting a sleeve such that the sleeve is slidably assembled with the stud at a position between the stud and the elastic cylindrical body;
a damping plate mounted to a lower end of the stud and placed in the damping fluid;
a spring disposed between the damping plate and the bottom of the cup-shaped housing to absorb impact; and
sliding seals fitted into a gap between the sleeve and the stud to prevent fluid leakage.

2. The fluid-filled mount as defined in claim 1, wherein the spring is assembled in a pre-compressed state.

3. The fluid-filled mount as defined in claim 1 or 2, wherein the sliding seals are formed to be self-sealing.

4. The fluid-filled mount as defined in any one of claims 1 to 3, wherein the elastic cylindrical body comprises a layered structure, with a plurality of cylindrical bushes embedded in the cylindrical body.

5. The fluid-filled mount as defined in claim 4, wherein the elastic cylindrical body comprises elastic layers having different strengths against lateral impact, divided by the cylindrical bushes.

6. The fluid-filled mount as defined in any one of claims 1 to 5, wherein the damping plate comprises a disk part and a cylindrical part formed along an outer edge of the disk part.

7. The fluid-filled mount as defined in claim 6, wherein the cylindrical part of the damping plate has an inclined surface almost parallel to an inner surface of the cup-shaped housing.

8. The fluid-filled mount as defined in any one of claims 1 to 6, wherein a protruded part is formed at the inner surface of the cup-shaped housing and/or a predetermined portion of the elastic cylindrical body, to have a surface facing at least one surface of top and bottom surfaces of the damping plate at a position opposite to the surface of the damping plate.

9. The fluid-filled mount as defined in any one of claims 1 to 8, wherein a stopper is formed at a position opposite to at least one surface of top and bottom surfaces of the damping plate to limit a vertical movement of the damping plate.

10. The fluid-filled mount as defined in any one of claims 1 to 9, wherein the spring comprises a clockwise coiled spring and a counterclockwise coiled spring.

11. The fluid-filled mount as defined in any one of claims 1 to 9, wherein the spring comprises a hollow rubber spring.

12. The fluid-filled mount as defined in any one of claims 1 to 11, wherein a dust-proofing cover is disposed to seal a sliding part of the stud and another sliding part between the stud and the sleeve.

13. The fluid-filled mount as defined in any one of claims 1 to 12, wherein the damping fluid comprises a silicone oil and a lubricant additive.

14. The fluid-filled mount as defined in any one of claims 1 to 13, wherein a lateral impact-absorbing stopper is provided along an outer circumferential surface of the sleeve such that the lateral impact-absorbing stopper comes into contact with an inner surface of a cylindrical bush of the elastic cylindrical body.

15. The fluid-filled mount as defined in any one of claims 1 to 14, wherein the damping plate is mounted to the lower end of the stud in a state of being slightly movable relative to the stud in a vertical direction.
